(19) Europäisches Patentamt
European Patent Office
Office européen des brevets

(11) **EP 4 465 400 A1**

(12) **EUROPEAN PATENT APPLICATION**
published in accordance with Art. 153(4) EPC

(43) Date of publication:
**20.11.2024  Bulletin 2024/47**

(21) Application number: **22950663.9**

(22) Date of filing: **14.07.2022**

(51) International Patent Classification (IPC):
**H01M 10/0525** (2010.01)

(52) Cooperative Patent Classification (CPC):
H01M 10/0525; Y02E 60/10

(86) International application number:
**PCT/CN2022/105828**

(87) International publication number:
**WO 2024/011542 (18.01.2024 Gazette 2024/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• **CHEN, Huiling
Ningde, Fujian 352100 (CN)**

• **WU, Zeli
Ningde, Fujian 352100 (CN)**
• **HAN, Changlong
Ningde, Fujian 352100 (CN)**
• **GUO, Jie
Ningde, Fujian 352100 (CN)**
• **ZHANG, Cuiping
Ningde, Fujian 352100 (CN)**
• **HUANG, Lei
Ningde, Fujian 352100 (CN)**
• **LIU, Wenhao
Ningde, Fujian 352100 (CN)**

(74) Representative: **Kraus & Lederer PartGmbB
Thomas-Wimmer-Ring 15
80539 München (DE)**

(54) **SECONDARY BATTERY, BATTERY MODULE, BATTERY PACK AND ELECTRIC DEVICE**

(57) The present application provides a secondary battery, a battery module, a battery pack, and an electrical device. The secondary battery includes a positive electrode plate, a negative electrode plate and an electrolytic solution, the negative electrode plate including a negative electrode film layer containing a negative electrode active material; and the electrolytic solution including a boron-containing lithium salt, the boron-containing lithium salt being configured to form a solid electrolyte interface film on the surface of the negative electrode active material, wherein a discharge capacity of the secondary battery is denoted as A in Ah, a mass of the electrolytic solution is denoted as B in g, a mass percentage of the boron-containing lithium salt relative to a total mass of the electrolytic solution is denoted as C%; and the secondary battery satisfies: $1 \leq B/A \leq 5$, $5 \times 10^{-6} \leq B \times C\%/A \leq 0.25$. The present application can improve the film-forming stability of the electrolytic solution on the negative electrode active material, thus ensuring the structural stability of the negative electrode active material and improving the cycle performance of the secondary battery; the electrolytic solution system is more stable and less likely to decompose, thus further improving the high-temperature storage performance of the secondary battery.

Fig. 1

EP 4 465 400 A1

**Description**

**TECHNICAL FIELD**

The present application relates to the field of batteries, in particular to a secondary battery, a battery module, a battery pack, and an electrical device.

**BACKGROUND**

Secondary batteries have characteristics of high capacity, long service life, and the like, and thus have been widely used in electronic devices, such as mobile phones, notebook computers, scooters, electric vehicles, electric airplanes, electric ships, electric toy cars, electric toy ships, electric toy planes, and electric tools.

With increasingly wide use of batteries, requirements for performances of secondary batteries are increasingly stringent, such as the requirements for better cycle performance and longer high-temperature storage life, so improvement of the cycle performance and high-temperature storage performance of secondary batteries is also a problem that needs to be solved urgently.

**SUMMARY**

The present application is based on the foregoing topic and aims to provide a secondary battery, a battery module, a battery pack, and an electrical device.

A first aspect of the present application provides a secondary battery, said secondary battery comprising a positive electrode plate, a negative electrode plate and an electrolytic solution; the negative electrode plate comprises a negative electrode film layer containing a negative electrode active material; the electrolytic solution comprises a boron-containing lithium salt, the boron-containing lithium salt is configured to form a solid electrolyte interface film on the surface of the negative electrode active material, where a discharge capacity of the secondary battery is denoted as A in Ah, a mass of the electrolytic solution is denoted as B in g, a mass percentage of the boron-containing lithium salt relative to a total mass of the electrolytic solution is denoted as C%; and the secondary battery satisfies: $1 \leq B/A \leq 5$, $5 \times 10^{-6} \leq B \times C\%/A \leq 0.25$; optionally, $1 \times 10^{-3} \leq B \times C\%/A \leq 0.23$.

As a result, by controlling $1 \leq B/A \leq 5$, $5 \times 10^{-6} \leq B \times C\%/A \leq 0.25$ so as to match the discharge capacity of the secondary battery with the mass percentage of the boron-containing lithium salt in the present application, it is possible to improve a film-forming stability of the electrolytic solution on the negative electrode active material, thereby ensuring the structural stability of the negative electrode active material, and improving the cycle performance of the secondary battery; and it is possible to make the secondary battery to exert its capacity sufficiently. Furthermore, when the discharge capacity of the secondary battery and the mass percentage of the boron-containing lithium salt are matched with each other, the electrolytic solution system is more stable and less likely to decompose, thereby further improving the high temperature storage performance of the secondary battery.

In any embodiment, the secondary battery satisfies at least one of conditions (1) to (3):

$$(1)\ 0.01 \leq A \leq 1000;$$

optionally, $50 \leq A \leq 550$;

$$(2)\ 0.01 \leq B \leq 3000;$$

optionally, $0.5 \leq B \leq 1500$;

$$(3)\ 1 \times 10^{-4}\% \leq C\% \leq 5\%;$$

optionally, $0.01\% \leq C\% \leq 3\%$.

In the above technical solution, the secondary battery can meet application in different scenarios; and when the mass percentage content of the boron-containing lithium salt is in the above range, it is likely to form a stable SEI film on the surface of the negative electrode active material, which is also conducive to ensuring conductivity of the electrolytic solution.

In any embodiment, the electrolytic solution further comprises a negative electrode film-forming additive, the negative electrode film-forming additive comprising a first additive and/or a second additive, the first additive comprises at least two of a carbonate additive, a sulphate additive, and a sulfite additive; and the second additive comprises a lithium salt

2

with a fluoro-oxalate or phosphate skeleton and a lithium salt with a sulfonylimide skeleton, wherein a mass percentage of the negative electrode film-forming additive relative to the total mass of the electrolytic solution is denoted as D%, and the secondary battery further satisfies: $0.1\% \leq (C+D)\% \leq 20\%$.

In the above technical solution, the negative electrode film-forming additive and the boron-containing lithium salt together constitute a component of the SEI film, and a combined amount of the negative electrode film-forming additive and the boron-containing lithium salt can be adjusted, so as to enable the resulting SEI film to have a better film-forming homogeneity and structural stability, and to reduce an interfacial, thereby improving battery performances, such as cycle and high temperature storage of the secondary battery.

In any embodiment, the secondary battery further satisfies at least one of conditions (4) to (7):

(4) a mass percentage of the carbonate additive relative to the total mass of the electrolytic solution is denoted as D1%, where $10^{-4}\% \leq D1\% \leq 5\%$;

(5) a mass percentage of the sulfate additive and sulfite additives relative to the total mass of the electrolytic solution is denoted as D2%, where $10^{-4}\% \leq D2\% \leq 5\%$;

(6) a mass percentage of the lithium salt with a fluoro-oxalate or phosphate skeleton relative to the total mass of the electrolytic solution is denoted as D3%, where $10^{-4}\% \leq D3\% \leq 5\%$; and

(7) a mass percentage of the lithium slat with a sulfonylimide skeleton relative to the total mass of the electrolytic solution is denoted as D4%, where $10^{-4}\% \leq D4\% \leq 5\%$.

By adjusting the mass percentage content of each component in the negative electrode film-forming additive in the present application, it is likely to form a stable SEI film on the surface of the negative electrode active material, wherein the SEI film has better chemical stability and thermal stability.

In any embodiment, the carbonate additive includes a cyclic carbonate additive and/or a linear carbonate additive; optionally, the cyclic carbonate additive includes one or more of vinylidene carbonate VC, fluoroethylene carbonate FEC, difluoroethylene carbonate DFEC, vinyl ethylene carbonate VEC, and dicaprylyl carbonate CC; the linear carbonate additive includes one or more of allyl ethyl carbonate AEC, diphenyl carbonate DPC, methyl allyl carbonate MAC, and polycarbonate VA; and/or the sulfate additive includes a cyclic sulfonate additive and/or a hydrocarbyl sulfate additive; optionally, the cyclic sulfonate additive includes one or more of 1,3-propane sultone PS, propene sultone PES, and 3-fluoro-1,3-propane sultone FPS; and/or the hydrocarbyl sulfate additive includes one or more of ethylene sulfate DTD, diethyl sulfate DES, and dimethyl sulfate DMS; and/or the sulfite additive includes ethylene sulfite ES and/or vinyl ethylene sulfite VES; and/or the lithium salt with a fluoro-oxalate or phosphate skeleton includes one or more of lithium tetrafluoro(oxalate)phosphate LiTFOP, lithium difluorophosphate $LiPO_2F_2$, and lithium bisfluorodioxalate phosphate LiBODFP; and/or the lithium slat with a sulfonylimide skeleton includes one or more of lithium bifluorosulfonimide $[LiN(SO_2F)_2]$, lithium bis(trifluoromethylsulfonyl)imide $LiN(CF_3SO_2)_2$, and lithium bistrifluoromethylsulfonimide LiTFSI.

In the present application, by adopting one or more of a carbonate additive, a sulfate additive, a sulfite additive, and a lithium fluoro-oxalate phosphate salt, it is possible to form an SEI film on the surface of the negative electrode active material, and the formed SEI film has a complicated composition and thus a higher structural stability.

In any embodiment, a coating weight of the negative electrode film layer is denoted as F in $mg/1540.25\ mm^2$, and the secondary battery further satisfies: $2 \times 10^{-5} \leq B \times (C+D)\%/F \leq 1$.

When the secondary battery of the present application satisfies the above formula, it is likely to enable the electrolytic solution and the negative electrode active material on the surface to undergo a film-forming reaction, and to uniformly form a SEI film on the surface of the negative electrode active material, thereby producing a good protection for the negative electrode active material; and with the electrolytic solution having a relatively high electrical conductivity, lithium ions can be intercalated into the negative electrode active material smoothly through the electrolytic solution after being de-intercalated from the positive electrode plate, thereby ensuring the cycle performance of the secondary battery.

In any embodiment, $50 \leq F \leq 500$.

When the coating weight of the negative electrode film layer of the present application is in the above range, a capacity of the secondary battery may be guaranteed.

In any embodiment, the boron-containing lithium salt has a molecular formula of $LiBF_aO_bC_cP_d$, in which $0 \leq a \leq 4$, $0 \leq b \leq 8$, $0 \leq c \leq 4$, $0 \leq d \leq 4$.

The B atom may combine with an oxygen-containing oxalate ligand, and the combined product has excellent thermal stability and easily forms an SEI film with excellent performance on the surface of the negative electrode active material, thereby ensuring structural stability of the negative electrode active material and then improving cycle performance of the secondary battery. As the boron-containing lithium salt has a bulky anionic group, it can promote dissociation of lithium ions, so that the electrolytic solution has a higher lithium ion mobility number, which is conducive to improving polarization and increasing the rate performance of the secondary battery.

In any embodiment, the boron-containing lithium salt includes one or more of lithium tetrafluoroborate $LiBF_4$, lithium bisoxalate borate LiBOB, and lithium bifluorooxalate borate LiDFOB.

In the present application, lithium tetrafluoroborate $LiBF_4$, lithium bisoxalate borate LiBOB, and lithium bifluorooxalate borate LiDFOB are used in conjunction and thus the formed SEI film has a more complicated composition and a more stable structure; and, on the basis of ensuring the structural stability, the SEI membrane can be ensured to have a relatively small impedance, so as to ensure low temperature performance of the secondary battery.

A second aspect of the present application further provides a battery module, including the secondary battery according to any embodiment of the first aspect of the present application.

A third aspect of the present application further provides a battery pack, including the battery module according to the embodiment of the second aspect of the present application.

A fourth aspect of the present application further provides an electrical device, including the secondary battery according to any embodiment of the first aspect of the present application, the battery module according to the embodiment of the second aspect of the present application, or the battery pack according to the embodiment of the third aspect of the present application.

## DESCRIPTION OF THE DRAWINGS

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.

Fig. 1 is a schematic diagram of an embodiment of a secondary battery of the present application.

Fig. 2 is an exploded schematic diagram of an embodiment of the secondary battery in Fig. 1.

Fig. 3 is a schematic diagram of an embodiment of a battery module of the present application.

Fig. 4 is a schematic diagram of an embodiment of a battery pack of the present application.

Fig. 5 is an exploded schematic diagram of an embodiment of the battery pack shown in Fig. 4.

Fig. 6 is a schematic diagram of an embodiment of an electrical device including the secondary battery of the present application as a power source.

The drawings are not drawn to actual scale.

Reference numerals are as follows:

1. Battery pack; 2. Upper box body; 3. Lower box body; 4. Battery module;

5. Secondary battery; 51. Housing; 52. Electrode assembly;

53. Cover plate; and

6. Electrical device.

## DETAILED DESCRIPTION

Hereinafter, embodiments of the secondary battery and the battery module, the battery pack and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

As used herein, the terms "a plurality of" mean two or more.

With the application and promotion of secondary batteries, their comprehensive performance has received increasing attention. Non-aqueous electrolytic solution is one of the key factors affecting performances of secondary batteries, currently the most widely used commercial non-aqueous electrolytic solution system is a solution of lithium hexafluorophosphate in a mixture of carbonates. However, in view that lithium hexafluorophosphate has a poor thermal stability under a high temperature environment, a boron-containing lithium salt is added to in the electrolyte system, the boron containing lithium salt itself having a high thermal decomposition temperature, so that the resulting electrolytic solution has an excellent performance in the secondary battery. With in-depth study, the inventors found that although the boron-containing lithium salt itself has a higher thermal decomposition temperature, its thermal stability in the electrolytic solution system is worse, thus deteriorating high-temperature storage performance of the secondary battery; and the solid electrolyte interface film (SEI film) formed therefrom on the surface of the negative electrode active material does not have sufficient stability, thus it fails to form a long-term effective protection for the negative electrode active material, leading to a continuous side reaction between the negative electrode active material and the electrolytic solution at a later stage, further deteriorating cycle performance of the secondary battery.

The inventors of the present application have accidentally discovered, after conducting a large amount of research, that when the discharge capacity of the secondary battery, the mass of the electrolytic solution, and the mass percentage of the boron-containing lithium salt are within a specific range, it is possible to enable the secondary battery to have good cycle performance and high-temperature storage performance both.

**Secondary battery**

In a first aspect, the present application provides a secondary battery. The secondary battery includes a positive electrode plate, a negative electrode plate, and an electrolytic solution; the negative electrode plate includes a negative electrode film layer containing a negative electrode active material; the electrolytic solution comprises a boron-containing lithium salt, the boron-containing lithium salt is configured to form a solid electrolyte interface film on the surface of the negative electrode active material, where a discharge capacity of the secondary battery is denoted as A in Ah, a mass of the electrolytic solution is denoted as B in gram, a mass percentage of the boron-containing lithium salt relative to a total mass of the electrolytic solution is denoted as C%; and the secondary battery satisfies: $1 \leq B/A \leq 5$, $5 \times 10^{-6} \leq B \times C\%/A \leq 0.25$.

Although the mechanism is not clear, the inventors unexpectedly found that the present application can improve the cycle performance and high temperature storage performance of the secondary battery when A, B and C% are controlled to satisfy the above relationship.

The discharge capacity A in Ah of a secondary battery refers to a capacity value of the secondary battery measured by setting the corresponding current and voltage of the secondary battery by a constant current charge/discharge tester at room temperature. Taking a ternary material as an example, a discharge capacity of a secondary battery is tested by putting the secondary battery on a constant current charge/discharge tester at a test temperature of 25°C, with the following test process. First, the secondary battery is charged at a certain rate of 0.05C in which 0.05C is a current value for discharging all of the secondary battery's power for 20h, to an upper limit voltage of the finished battery where the upper limit voltage of the ternary material is generally 4.2-4.5V, and then the secondary battery is allowed to stand for 30 minutes and then is discharged to a lower limit voltage of the finished battery where the lower limit voltage of the ternary material is generally at 2.5V, at a rate of 0.05C. The measured discharge capacity is the discharge capacity A in Ah of the secondary battery.

The mass B in gram of the electrolytic solution is a mass of the electrolytic solution in the finished secondary battery, which is determined as follows. An exemplary method of obtaining the electrolytic solution from the secondary battery comprises the steps in which the secondary battery is discharged to a discharge cut-off voltage (for safety reasons, the battery is generally in a fully discharged state) and centrifuged, and then a free electrolytic solution is collected from an injection port of the secondary battery and the remaining battery core components such as electrode plates and separator are centrifuged at a centrifugation rate of greater than 10000 r/min, the centrifuged electrolytic solution is repeatedly collected until no visible liquid exists after centrifugation, and the total amount of electrolytic solution collected is a mass B in gram of the electrolytic solution in the finished battery core.

An electrolytic solution is an important component of a lithium ion battery, and functions to transport lithium ions between a positive electrode plate and a negative electrode plate of secondary batteries. The boron-containing lithium salt, as a lithium salt with a B atom as its center atom, can be coordinated with alkoxy, o-diphenol, o-hydroxyl, carboxylic acid and the like to form an anionic coordination complex, and the anionic coordination complex is mainly of a large $\pi$-conjugate structure, with a relatively dispersed distribution of delocalized negative charges of the center ion, and the anion has a larger radius, which makes it difficult for the anion to form ion pairs with lithium ions with a stronger binding force in organic solvents. Thus, it can improve the lithium ion mobility number in the electrolytic solution, and facilitates the improvement of the polarization and the rate performance of secondary battery. Moreover, the boron-containing lithium salt can form a solid electrolyte interface film (SEI film) with excellent performances on the surface of the negative electrode active material at an early stage. The SEI film is insoluble in organic solvents, and it can be stable in an organic electrolytic solution, which can effectively reduce the continuous reduction and decomposition of solvent molecules in the electrolytic solution at the negative electrode interface to form unstable SEI, thereby ensuring the structural stability of the negative electrode active material, and thus improving the cycle performance of the secondary battery at an early stage.

The method for determining the mass percentage C% of the boron-containing lithium salt can be determined according to methods known in the art. For example, it can be determined by gas chromatography-mass spectrometry (GC-MS), ion chromatography (IC), liquid chromatography (LC), nuclear magnetic resonance spectroscopy (NMR), and the like.

It is noted that when testing parameters of the electrolytic solution, the electrolytic solution can be obtained from a secondary battery. An exemplary method of obtaining the electrolyte from the secondary battery comprises the step of discharging the secondary battery to a discharge cut-off voltage (for safety, the battery is generally left in a fully discharged state) and then centrifuging the secondary battery, after which an appropriate amount of liquid obtained from the centrifugation process is taken as the electrolytic solution. The electrolytic solution can also be obtained directly from the liquid injection port of the secondary battery.

In the present application, by controlling $1 \leq B/A \leq 5$, $5\times10^{-6} \leq B\times C\%/A \leq 0.23$ so as to match the discharge capacity of the secondary battery with the mass percentage of the boron-containing lithium salt, it is possible to improve a film-forming stability of the electrolytic solution on the negative electrode active material, thereby ensuring the structural stability of the negative electrode active material, and improving the cycle performance of the secondary battery, and also it is possible to make the secondary battery to exert its capacity sufficiently. Furthermore, when the discharge capacity of the secondary battery and the mass percentage of the boron-containing lithium salt are matched with each other, the electrolytic solution system is more stable and less likely to decompose, thereby further improving the high temperature storage performance of the secondary battery. Optionally, $10^{-4} \leq B\times C\%/A \leq 0.2$. By way of example, $5\times10^{-6} \leq B\times C\%/A \leq 0.25$, $5\times10^{-5} \leq B\times C\%/A \leq 0.25$, $5\times10^{-4} \leq B\times C\%/A \leq 0.25$, $3\times10^{-4} \leq B\times C\%/A \leq 0.25$, $1\times10^{-4} \leq B\times C\%/A \leq 0.25$, $1\times10^{-4} \leq B\times C\%/A \leq 0.2$, $5\times10^{-3} \leq B\times C\%/A \leq 0.25$, $5\times10^{-2} \leq B\times C\%/A \leq 0.25$, $0.5 \leq B\times C\%/A \leq 0.25$, $5\times10^{-6} \leq B\times C\%/A \leq 0.2$, $5\times10^{-6} \leq B\times C\%/A \leq 0.1$, $5\times10^{-6} \leq B\times C\%/A \leq 0.01$ or $5\times10^{-6} \leq B\times C\%/A \leq 2\times10^{-3}$, and the like.

In some embodiments, $0.01 \leq A \leq 1000$. When the discharge capacity of the secondary battery is in the above range, the secondary battery can fulfill different scenarios. Optionally, $50 \leq A \leq 550$. By way of example, the discharge capacity A in Ah of the secondary battery may be 0.01 Ah, 0.1 Ah, 0.2 Ah, 0.5 Ah, 1 Ah, 2 Ah, 5 Ah, 10 Ah, 15 Ah, 20 Ah, 50 Ah, 80 Ah, 100 Ah, 200 Ah, 300 Ah, 500 Ah, 600 Ah, 700 Ah, 800 Ah, or 1000 Ah; or a range consisting of any two of the above values.

In some embodiments, $0.01 \leq B \leq 3000$. When the mass of the electrolytic solution is in the above range, use of different industrial scenarios can be fulfilled. Optionally, $0.5 \leq B \leq 1500$. As an example, the mass B g of the electrolytic solution may be 0.01g, 0.05g, 0.1g, 0.2g, 0.5g, 0.6g, 0.8g, 1g, 2g, 5g, 8g, 10g, 15g, 20g, 30g, 50g, 80g, 100g, 200g, 300g, 500g, 700g, 800g, 1000g, 1500g, 2000g, 2500g, 2800g, or 3000g; or a range consisting of any two of the above values.

In some embodiments, $1 \times 10^{-4}\% \leq C\% \leq 5\%$. When the mass percentage of the boron-containing lithium salt is in the above range, it is allowed to form a stable SEI film on the surface of the negative electrode active material, which is also conducive to ensuring conductivity of the electrolytic solution. Optionally, $0.1\% \leq C \leq 3\%$. As an example, the mass percentage C% of the boron-containing lithium salt may be $1 \times 10^{-4}\%$, $1.5 \times 10^{-4}\%$, $2 \times 10^{-4}\%$, $5 \times 10^{-4}\%$, $1 \times 10^{-3}\%$, $1.5 \times 10^{-3}\%$, $2 \times 10^{-3}\%$, $5 \times 10^{-3}\%$, $1 \times 10^{-2}\%$, $5 \times 10^{-2}\%$ 0.1%, 0.5%, 0.8%, 1%, 1.5%, 2%, 3%, 4%, or 5%; or a range consisting of any two of these values.

[Electrolytic solution]

The electrolytic solution functions as conducting metal ions between the positive electrode plate and the negative electrode plate, and the electrolytic solution in the present application may be an electrolytic solution commonly known in the art for secondary batteries. The electrolytic solution includes a lithium salt and an organic solvent.

In some embodiments, the lithium salt comprises a boron-containing lithium salt and the boron-containing lithium salt has a molecular formula of $LiBF_aO_bC_cP_d$, where $0 \leq a \leq 4$, $0 \leq b \leq 8$, $0 \leq c \leq 4$, and $0 \leq d \leq 4$.

The B atom may combine with an oxygen-containing oxalate ligand, and the combined product has excellent thermal stability and easily forms an SEI film with excellent performance on the surface of the negative electrode active material, thereby ensuring structural stability of the negative electrode active material and then improving cycle performance of the secondary battery. Of course, the B atom may alternatively combine with a halogen atom, especially a fluorine atom, the fluorine atom has a strong electronwithdrawing induction effect and high thermal and chemical stability, and because of its larger anionic group, it can promote the dissociation of lithium ions, so that the electrolytic solution has a higher migration number of lithium ions, which is conducive to the improvement of polarization and the improvement of rate performance of the secondary battery.

As an example, the boron-containing lithium salt includes one or more of lithium tetrafluoroborate ($LiBF_4$), lithium bisoxalate borate ($LiB(C_2O_4)_2$, abbreviated as LiBOB), and lithium difluorooxalate borate ($LiBC_2O_4F_2$, abbreviated as LiDFOB). Further, the boron-containing lithium salt includes a combination of lithium tetrafluoroborate $LiBF_4$, lithium bisoxalate borate ($LiB(C_2O_4)_2$, abbreviated as LiBOB), and lithium difluorooxalate borate ($LiBC_2O_4F_2$, abbreviated as LiDFOB).

When the lithium tetrafluoroborate ($LiBF_4$) is used with an organic solvent such as a carbonate solvent in the electrolytic solution or an additive, the system based on the lithium tetrafluoroborate has a relatively low viscosity, which is conducive to the release of lithium ions, thereby improving conductivity of the electrolytic solution. The SEI film formed from the lithium tetrafluoroborate has a uniform thickness, good dynamics activity, and low charge transfer resistance in the secondary battery, which can significantly improve low-temperature performance of the secondary battery; and the SEI film is less prone to thermal decomposition, has relatively stable performance at high temperatures, and therefore can significantly improve the high-temperature performance of the secondary battery.

Either the lithium bisoxalate borate LiBOB or the lithium difluorooxalate borate LiDFOB has a passivation effect on a positive electrode current collector in the positive electrode plate, which can reduce the risk of corrosion of the positive electrode current collector due to side reactions with the positive electrode current collector and improve structural stability of the positive electrode plate. In addition, the electrolytic solution containing either the lithium bisoxalate borate LiBOB or the lithium difluorooxalate borate LiDFOB is unlikely to produce acidic substances, which can further reduce the risk of corrosion of the positive electrode current collector. The lithium bisoxalate borate LiBOB and the lithium difluorooxalate borate LiDFOB have good compatibility with the positive electrode active material, which is conducive to migration of lithium ions; and the LiBOB or the LiDFOB can form an effective SEI film on the surface of the negative electrode active material to improve protective performance for the negative electrode active material.

When the lithium tetrafluoroborate $LiBF_4$, the lithium bisoxalate borate LiBOB and the lithium difluorooxalate borate LiDFOB are used together, the SEI film formed from the three has a more complicated composition and a more stable structure; and on the basis of ensuring the structural stability, it is possible to ensure the SEI film to have a relatively small impedance, thereby ensuring the low-temperature performance of the secondary battery.

When the secondary battery of the present application comprises the above lithium salt, a SEI film with a stable structure and a relatively small impedance value can be formed on the surface of the negative electrode active material, thereby improving the high and low temperature performance of the secondary battery.

In some embodiments, the lithium salt may further include one or more of lithium hexafluorophosphate ($LiPF_6$), lithium perchlorate ($LiClO_4$), lithium hexafluoroarsenate ($LiAsF_6$), lithium bis(fluorosulfonyl)imide (LiFSI), lithium bistrifluoromethanesulphonylimide (LiTFSI), lithium trifluoromethanesulfonate (LiTFS), lithium difluorophosphate (LiPO$_2$F$_2$), lithium difluorobioxalate phosphate (LiDFOP), and lithium tetrafluorooxalate phosphate (LiTFOP). The combination of the above lithium salt with the boron-containing lithium salt can improve conductivity of the electrolytic solution.

By way of example, the lithium salt may include one or more selected from lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis(fluorosulphonyl)imide (LiFSI), lithium bistrifluoromethylsulfonylimide (LiTFSI), lithium trifluoromethanesulfonate (LiTFS), lithium difluorooxalateborate (LiDFOB), and lithium dioxalateborate (LiBOB).

In some embodiments, the organic solvent may further comprise one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), cyclobutane sulfone (SF), dimethyl sulfone (MSM), methyl ethyl sulfone (EMS), and diethyl sulfone (ESE).

In some embodiments, the electrolytic solution may further include a film-forming additive, such as a negative electrode film-forming additive. The negative electrode film-forming additive comprises a first additive and a second additive; the first additive includes at least two of a carbonate additive, a sulfate additive, and a sulfite additive and the second additive comprises a lithium salt with a fluoro-oxalate or phosphate skeleton and/or a lithium salt with a sulfonylimide skeleton.

One or more of a carbonate additive, a sulfate additive, a sulfite additive, and a lithium fluorooxalate phosphate. The negative electrode film-forming additive is capable of forming a SEI film on the surface of the negative electrode active material and the SEI film as formed has a relatively complex composition and higher structural stability.

A mass percentage of the negative electrode film-forming additive relative to the total mass of the electrolytic solution is denoted as D%, and a mass percentage of the boron-containing lithium salt relative to the total mass of the electrolytic solution is denoted as C% and the secondary battery further satisfies: $0.01\% \leq (C+D)\% \leq 20\%$.

The negative electrode film-forming additive and the boron-containing lithium salt both together form components of the SEI film, and the combined amount of the negative electrode film-forming additive and the boron-containing lithium salt can be adjusted, so that it is possible to form a SEI film having a better homogeneity and more stable structure; and it is possible to reduce the interfacial impedance, thereby improving battery performances such as the cycle and high-temperature storage of the secondary battery. Optionally, $0.1\% \leq (C+D)\% \leq 12\%$. By way of example, $(C+D)\%$ may be 0.1, 0.5, 1, 2, 3, 4, 5, 6, 7, 8, 9, 10, 12, 15, 16, 18, or 20; or a range comprising any two of the above values.

As an example, the carbonate additive includes a cyclic carbonate additive and/or a linear carbonate additive. Further, the cyclic carbonate additive includes one or more of vinylidene carbonate VC, fluoroethylene carbonate FEC, difluoroethylene carbonate DFEC, vinyl ethylene carbonate VEC, and dicaprylyl carbonate CC. The linear carbonate additive includes one or more of allyl ethyl carbonate AEC, diphenyl carbonate DPC, methyl allyl carbonate MAC, and polycarbonate VA. A mass percentage of the carbonate additive relative to the total mass of the electrolytic solution is denoted as D1%

The mass percentage D1% of the carbonate additive can be adjusted to satisfy: $10^{-4}\% \leq D1\% \leq 5\%$, such that it forms a stable SEI film on the surface of the negative electrode active material, and the SEI film has a better chemical stability and thermal stability. By way of example, the mass percentage D1% of the carbonate additive may be $1\times10^{-4}\%$, $1.5\times10^{-4}\%$, $2\times10^{-4}\%$, $5\times10^{-4}\%$, $1\times10^{-3}\%$ $1.5\times10^{-3}\%$ $2\times10^{-3}\%$ $5\times10^{-3}\%$, $1\times10^{-2}\%$ , $5\times10^{-3}\%$, 0.1%, 0.5%, 0.8%, 1%, 1.5%, 2%, 3%, 4%, or 5%; or a range of any two of these values.

As an example, the sulfate additive includes a cyclic sulfonate additive and/or a hydrocarbyl sulfate additive. Further, the cyclic sulfonate additive includes one or more of 1,3-propane sultone PS, propene sultone PES, and 3-fluoro-1,3-propane sultone FPS. The hydrocarbyl sulfate additive includes one or more of ethylene sulfate DTD, diethyl sulfate DES, and dimethyl sulfate DMS.

As an example, the sulfite additive includes ethylene sulfite ES and/or vinyl ethylene sulfite VES.

A mass percentage of said sulfate additive or sulfite additive relative to the total mass of said electrolytic solution is denoted as D2%.

The mass percentage D2% of the sulfate additive or the sulfite additive can be adjusted to satisfy: $10^{-4}\% \leq D2\% \leq 5\%$, so that it forms a stable SEI film on the surface of the negative electrode active material, and the SEI film has a better chemical stability and thermal stability. By way of example, the mass percentage D2% of the sulfate additive or the sulfite additive may be $1\times10^{-4}\%$, $1.5\times10^{-4}\%$, $2\times10^{-4}\%$, $5\times10^{-4}\%$, $1\times10^{-3}\%$, $1.5\times10^{-3}\%$, $2\times10^{-3}\%$, $5\times10^{-3}\%$, $1\times10^{-2}\%$, $5\times10^{-2}\%$, 0.1%, 0.5%, 0.8%, 1%, 1.5%, 2%, 3%, 4%, or 5%; or a range consisting of any two of the above values.

By way of example, said lithium salt with a fluorooxalate or phosphate skeleton comprises one or more of lithium tetrafluoro(oxalate)phosphate LiTFOP, lithium difluorophosphate LiPO$_2$F$_2$, and lithium bifluoro dioxalate phosphate LiBODFP. A mass percentage of said lithium salt with a fluorooxalate or phosphate skeleton relative to the total mass of said electrolytic solution is denoted as D3%.

The mass percentage D3% of said lithium salt with a fluorooxalate or phosphate skeleton can be adjusted to

satisfy: $10^{-4}\% \leq D3\% \leq 5\%$, so that it forms a stable SEI film on the surface of the negative electrode active material, and the SEI film has a better chemical stability and thermal stability. By way of example, the mass percentage D3% of said lithium salt with a fluorooxalate or phosphate skeleton may be $1\times10^{-4}\%$, $1.5\times10^{-4}\%$, $2\times10^{-4}\%$, $5\times10^{-4}\%$, $1\times10^{-3}\%$, $1.5\times10^{-3}\%$, $2\times10^{-3}\%$, $5\times10^{-3}\%$, $1\times10^{-2}\%$, $5\times10^{-2}\%$, 0.1%, 0.5%, 0.8%, 1%, 1.5%, 2%, 3%, 4%, or 5%; or a range consisting of any two of the above values.

By way of example, said lithium salt with a sulfonimide skeleton comprises one or more of lithium bis(trifluorosulfonyl)imide [$LiN(SO_2F)_2$], lithium bis(trifluoromethylsulfonyl)imide $LiN(CF_3SO_2)_2$, and lithium bis(trifluoromethylsulfonyl) imide LiTFSI. A mass percentage of said lithium salt with a sulfonimide skeleton relative to the total mass of said electrolytic solution is denoted as D4%.

The mass percentage D4% of said lithium salt with a sulfonimide skeleton can be adjusted to satisfy: $10^{-4}\% \leq D4\% \leq 5\%$, so that it forms a stable SEI film on the surface of the negative electrode active material, and the SEI film has a better chemical stability and thermal stability. By way of example, the mass percentage D4% of said lithium salt with a sulfonimide skeleton may be $1\times10^{-4}\%$, $1.5\times10^{-4}\%$, $2\times10^{-4}\%$, $5\times10^{-4}\%$, $1\times10^{-3}\%$, $1.5\times10^{-3}\%$, $2\times10^{-3}\%$, $5\times10^{-3}\%$, $1\times10^{-2}\%$, $5\times10^{-2}\%$, 0.1%, 0.5%, 0.8%, 1%, 1.5%, 2%, 3%, 4%, or 5%; or a range consisting of any two of the above values.

The electrolytic solution of the present application can be prepared according to methods conventional in the art. For example, additives, solvents, electrolyte salts and the like can be mixed well to obtain the electrolytic solution. There is no particular limitation on the order of addition of each material. For example, said additives, said electrolyte salts, and the like can be added to the non-aqueous solvent and mixed well to obtain a non-aqueous electrolytic solution.

In the present application, components and their contents in the electrolytic solution can be determined according to methods known in the art. For example, they can be determined by gas chromatography-mass spectrometry (GC-MS), ion chromatography (IC), liquid chromatography (LC), nuclear magnetic resonance spectroscopy (NMR), and the like.

It is to be noted that, when the electrolytic solution of the present application is tested, a fresh electrolytic solution may be directly taken, or the electrolytic solution may be obtained from the secondary battery. An exemplary method for obtaining the electrolytic solution from the secondary battery includes the following steps: the secondary battery is discharged to a discharge cut-off voltage (for safety reasons, the battery is generally in a fully discharged state) and centrifuged, and then an appropriate amount of centrifuged liquid, namely, a non-aqueous electrolytic solution, is taken. The non-aqueous electrolytic solution may alternatively be directly obtained from an injection port of the secondary battery.

[Negative electrode plate]

The negative electrode plate includes a negative electrode current collector and a negative electrode film layer disposed on at least one surface of the negative electrode current collector, and the negative electrode film layer includes a negative electrode active material.

As an example, the negative electrolyte current collector has two surfaces opposite in its thickness direction, and the negative electrode film layer is disposed on either or both of the two opposite surfaces of the negative electrolyte current collector.

In some embodiments, the negative electrode active material may be a negative electrode active material commonly known in the art for batteries. As an example, the negative electrode active material may include at least one of artificial graphite, natural graphite, soft carbon, hard carbon, a silicon-based material, a tin-based material, lithium titanate, lithium-aluminum alloy, and the like. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that may be used as negative electrode active materials of batteries may alternatively be used. One type of these negative electrode active materials may be used alone, or two or more types may be used in combination.

In some embodiments, a coating weight of the negative electrode film layer is denoted as F in $mg/1540.25\ mm^2$, and the secondary battery also satisfies: $2\times10^{-5} \leq B\times(C+D)\%/F \leq 1$. As used herein, the coating weight of the negative electrode film layer refers to the coating weight of the negative electrode film layer disposed on one surface of the negative electrode current collector.

When the secondary battery of the present application satisfies the above formula, it is possible for the electrolytic solution and the negative electrode active material on the surface to undergo a film-forming reaction to uniformly form a SEI film on the surface of the negative electrode active material, thereby producing a good protection for the negative electrode active material; with the electrolytic solution having a relatively high electrical conductivity, lithium ions can be intercalated into the negative electrode active material smoothly through the electrolytic solution after being de-intercalated from the positive electrode plate, thereby ensuring the cycle performance of the secondary battery. Optionally, $5\times10^{-5} \leq B\times(C+D)\%/F \leq 0.5$. By way of example, $B\times(C+D)\%/F$ may be $2\times10^{-5}$, $5\times10^{-5}$, $1\times10^{-4}$, $2\times10^{-4}$, $2\times10^{-3}$, $5\times10^{-2}$, 0.1, or 1; or a range comprising any two of the above values.

The coating weight of the negative electrode film layer has a well-known meaning in the art and can be determined by a differential weight method. The mass of the negative electrode film layer is tested as follows. The obtained negative electrode plate of secondary batteries is vacuum dried at 105° C for 48 hours and is pressed into a number of small discs with a circular press with an area of 1540.25 mm$^2$. These small discs are weighed to obtain their average value, recorded as m0 in mg. Then the obtained negative electrode plate of secondary batteries is wiped with deionized water and wiped to completely remove the single-sided negative electrode active material until the negative electrode current collector has no obvious black marks present. After drying at 105°C for 5 hours, the negative electrode plate is pressed into a number of small discs with the same circular press. These small discs are weighed to obtain their average value, recorded as m1 in mg. The coating weight of the negative electrode film layer is (m0-m1) mg/1540.25 mm2, with the value of m0-m1 corresponding to F as used herein.

In some embodiments, $50 \leq F \leq 500$.

When the coating weight of the negative electrode film layer is within the above range, a capacity of the secondary battery can be guaranteed. By way of example, F may be 50, 60, 80, 100, 120, 150, 160, 180, 200, 220, 250, 280, 300, 350, 380, 400, 420, 450, 480, or 500.

In some embodiments, the negative electrode film layer may further optionally include a negative electrode binder. There is no particular limitation on the type of the negative electrode binder in the present application. As an example, the negative electrode binder may include one or more of styrene butadiene rubber (SBR), water-soluble unsaturated resin SR-1B, water-based acrylic resin such as polyacrylic acid PAA, polymethacrylic acid PMAA, and polyacrylic acid sodium PAAS, polyacrylamide (PAM), polyvinyl alcohol (PVA), sodium alginate (SA), and carboxymethyl chitosan (CMCS). In some embodiments, based on a total mass of the negative electrode film layer, the negative electrode binder is present in a mass percentage of 5% or less.

In some embodiments, the negative electrode film layer may further optionally include a negative electrode conductive agent. There is no particular limitation on the type of the negative electrode conductive agent in the present application. As an example, the negative electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the negative electrode film layer, the negative electrode conductive agent is present in a mass percentage of 5% or less.

In some embodiments, the negative electrode film layer may further optionally include other auxiliaries. As an example, the other auxiliaries may include a thickener, such as carboxymethyl cellulose sodium (CMC-Na) or a PTC thermistor material. In some embodiments, based on the total mass of the negative electrode film layer, the other auxiliaries are present in a total mass percentage of 2% or less.

In some embodiments, the negative electrode current collector may be a metal foil or a composite current collector. As an example of the metal foil, a copper foil or a copper alloy foil may be used. The composite current collector may include a polymer material base layer and a metal material layer formed on at least one surface of the polymer material base layer. As an example, the metal material may include one or more of copper, copper alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The negative electrode film layer is usually formed by coating the negative electrode current collector with a negative electrode slurry, drying, and cold-pressing. The negative electrode slurry is usually formed by dispersing the negative electrode active material, the optional conductive agent, the optional binder, and the other optional auxiliaries in a solvent and stirring uniformly. The solvent may be N-methylpyrrolidone (NMP) or deionized water, but is not limited thereto.

The negative electrode plate does not exclude other additional functional layers than the negative electrode film layer. For example, in some embodiments, the negative electrode plate further includes a protective layer covering the surface of the negative electrode film layer.

[Positive electrode plate]

In some embodiments, the positive electrode plate includes a positive electrode current collector and a positive electrode film layer disposed on at least one surface of the positive electrode current collector. For example, the positive electrode current collector has two opposite surfaces in its thickness direction, and the positive electrode film layer is disposed on either or both of the two opposite surfaces of the positive electrode current collector.

The positive electrode film layer includes a positive electrode active material, which may be a positive electrode active material commonly known in the art for secondary batteries. For example, the positive electrode active material may include at least one of a lithium transition metal oxide, a lithium-containing phosphate with an olivine structure, and respective modified compounds thereof. Examples of the lithium transition metal oxide may include at least one of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the lithium-containing phosphate with an olivine structure may include at least one of a lithium iron phosphate, a composite material of a lithium iron phosphate and carbon, a lithium manganese phosphate, a composite material of a lithium manganese phosphate and carbon, a lithium manganese iron phosphate, a composite material of a lithium manganese iron phosphate and carbon, and respective modified compounds thereof. The present application is not limited to these materials, and may also use other conventionally known materials that can be used as positive electrode active materials of secondary batteries. These positive electrode active materials may be used alone, or may be combined with two or more.

In some embodiments, the positive electrode active material includes $LiNi_xCo_yMn_zM_{1-x-y-z}O_2$ or $LiNi_aCo_bAl_cN_{1-a-b-c}O_2$, where M and N are any one independently selected from Co, Ni, Mn, Mg, Cu, Zn, Al, Sn, B, Ga, Cr, Sr, V and Ti, $0 \leq y \leq 1$, $0 \leq x < 1$, $0 \leq z \leq 1$, $x+y+z \leq 1$, $0 \leq a \leq 1$, $0 \leq b \leq 1$, $0 \leq c \leq 1$, and $a+b+c \leq 1$. The positive electrode active material is used with the boron-containing lithium salt, and B atoms in the boron-containing lithium salt easily combine with O atoms in the positive electrode active material, thereby reducing charge transfer resistance of the positive electrode active material and reducing diffusion resistance of lithium ions within a bulk phase of the positive electrode active material. Therefore, when the non-aqueous electrolytic solution contains appropriate amounts of lithium tetrafluoroborate and lithium difluorooxalate borate, the low-cobalt or cobalt-free positive electrode active material can have a significantly improved lithium ion diffusion rate, and lithium ions in the bulk phase of the low-cobalt or cobalt-free positive electrode active material can be replenished to the surface in a timely manner so that excessive lithium de-intercalation from the surface of the low-cobalt or cobalt-free cathode active material may be avoided, thereby stabilizing crystal structure of the low-cobalt or cobalt-free cathode active material. The more stable crystal structure of the low-cobalt or cobalt-free positive electrode active material can greatly reduce probability of instability in structural, chemical, or electrochemical properties of the positive electrode active material due to the excessive lithium de-intercalation from the surface of the low-cobalt or cobalt-free positive electrode active material, such as irreversible distortion and increased lattice defects of the positive electrode active material.

$LiNi_xCo_yMn_zM_{1-x-y-z}O_2$ or $LiNi_aCo_bAl_cN_{1-a-b-c}O_2$ may be prepared according to a conventional method in the art. An exemplary preparation method is as follows: a lithium source, a nickel source, a cobalt source, a manganese source, an aluminum source, a precursor of an M element, and a precursor of an N element are mixed and sintered. The sintering atmosphere may be an oxygen-containing atmosphere, such as air atmosphere or oxygen atmosphere. The sintering atmosphere has an $O_2$ concentration of, for example, 70% to 100%. The sintering temperature and time may be adjusted according to an actual situation.

As an example, the lithium source includes, but is not limited to, at least one of lithium oxide ($Li_2O$), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), and lithium nitrate ($LiNO_3$). As an example, the nickel source includes, but is not limited to, at least one of nickel sulfate, nickel nitrate, nickel chloride, nickel oxalate, and nickel acetate. As an example, the cobalt source includes, but is not limited to, at least one of cobalt sulfate, cobalt nitrate, cobalt chloride, cobalt oxalate, and cobalt acetate. As an example, the manganese source includes, but is not limited to, at least one of manganese sulfate, manganese nitrate, manganese chloride, manganese oxalate, and manganese acetate. As an example, the aluminum source includes, but is not limited to, at least one of aluminum sulfate, aluminum nitrate, aluminum chloride, aluminum oxalate, and aluminum acetate. As an example, the precursor of the M element includes, but is not limited to, at least one of oxides, nitrate compounds, carbonate compounds, hydroxide compounds, and acetate compounds of the M element. As an example, the precursor of the N element includes, but is not limited to, at least one of ammonium fluoride, lithium fluoride, hydrogen fluoride, ammonium chloride, lithium chloride, hydrogen chloride, ammonium nitrate, ammonium nitrite, ammonium carbonate, ammonium bicarbonate, ammonium phosphate, phosphoric acid, ammonium sulfate, ammonium bisulfate, ammonium bisulfite, ammonium sulfite, ammonium bisulfide, hydrogen sulfide, lithium sulfide, ammonium sulfide, and elemental sulfur.

In some embodiments, based on a total mass of the positive electrode film layer, a layered material with molecular formula $LiNi_xCo_yMn_zM_{1-x-y-z}O_2$ or $LiNi_aCo_bAl_cN_{1-a-b-c}O_2$ has a mass percentage of 80% to 99%. For example, the mass percentage of the layered material with molecular formula $LiNi_xCo_yMn_zM_{1-x-y-z}O_2$ or $LiNi_aCo_bAl_cN_{1-a-b-c}O_2$ may be 80%, 81%, 82%, 83%, 84%, 85%, 86%, 87%, 88%, 89%, 90%, 91%, 92%, 93%, 94%, 95%, 96%, 97%, 98%, 99%, or a range of any of the above values. Optionally, the mass percentage of the layered material with molecular formula $LiNi_xCo_yMn_zM_{1-x-y-z}O_2$ or $LiNi_aCo_bAl_cN_{1-a-b-c}O_2$ is 85% to 99%, 90% to 99%, 95% to 99%, 80% to 98%, 85% to 98%, 90% to 98%, 95% to 98%, 80% to 97%, 85% to 97%, 90% to 97%, or 95% to 97%.

In some embodiments, the positive electrode film layer may optionally further include a positive electrode conductive agent. There is no particular limitation to the type of the positive electrode conductive agent in the present application. As an example, the positive electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the positive electrode film layer, the positive electrode conductive agent is present in a mass percentage of 5% or less.

In some embodiments, the positive electrode film layer may further optionally include a positive electrode binder. There is no particular limitation on the type of the positive electrode binder in the present application. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoridehexafluoropropylene-tetrafluoroethylene terpolymer, tetrafluoroethylenehexafluoropropylene copolymer, and fluoroacrylate resin. In some embodiments, based on the total mass of the positive electrode film layer, the positive electrode binder is present in a mass percentage of 5% or less.

In some embodiments, the positive electrode current collector may be a metal foil or a composite current collector. As an example of the metal foil, an aluminum foil or an aluminum alloy foil may be used. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The positive electrode film layer is usually formed by coating the positive electrode current collector with a positive electrode slurry, drying, and cold-pressing. The positive electrode slurry is usually formed by dispersing the positive electrode active material, the optional conductive agent, the optional binder, and any other components in a solvent and stirring uniformly. The solvent may be N-methylpyrrolidone (NMP), but is not limited thereto.

[Separator]

In some embodiments, the secondary battery further includes a separator. There is no particular limitation on the type of the separator in the present application. The separator may be any known porous separator with good chemical and mechanical stability.

In some embodiments, the separator may be made of a material selected from at least one of glass fibers, a non-woven fabric, polyethylene, polypropylene, and polyvinylidene fluoride. The separator may be a single-layer thin film or a multi-layer composite thin film without special limitations. When the separator is a multi-layer composite thin film, materials of various layers may be the same or different without special restrictions.

In some embodiments, the positive electrode plate, the negative electrode plate, and the separator may be manufactured into an electrode assembly through a winding process or a stacking process.

In some embodiments, the secondary battery may include an outer package. The outer package may be used for packaging the foregoing electrode assembly and electrolyte.

In some embodiments, the outer package of the secondary battery may be a hard housing, such as a hard plastic housing, an aluminum housing, or a steel housing. The outer package of the secondary battery may alternatively be a soft bag, such as a pocket type soft bag. The soft bag may be made of plastic, which may be polypropylene, polybutylene terephthalate, poly(butylene succinate), and the like.

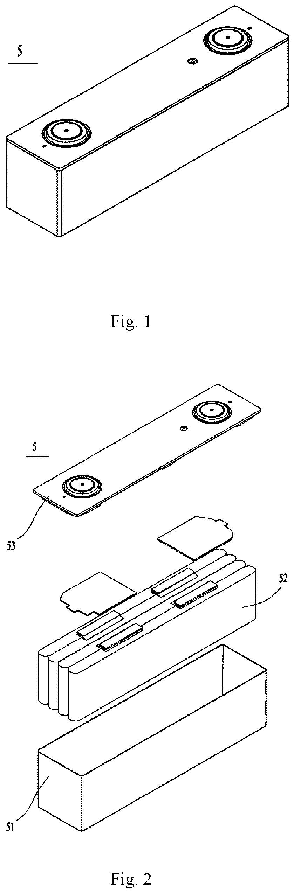

The present application does not have particular limitation to the shape of the secondary battery. The secondary battery may be cylindrical, square, or in other arbitrary shape. Fig. 1 shows a secondary battery 5 with a square structure as an example.

In some embodiments, as shown in Fig. 1 and Fig. 2, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 is used to close the opening to seal the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be adjusted according to requirements.

A manufacturing method for the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or laminating process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary battery according to the present application may be assembled into a battery module. The battery module may include a plurality of secondary batteries, and the specific quantity may be adjusted according to the application and capacity of the battery module.

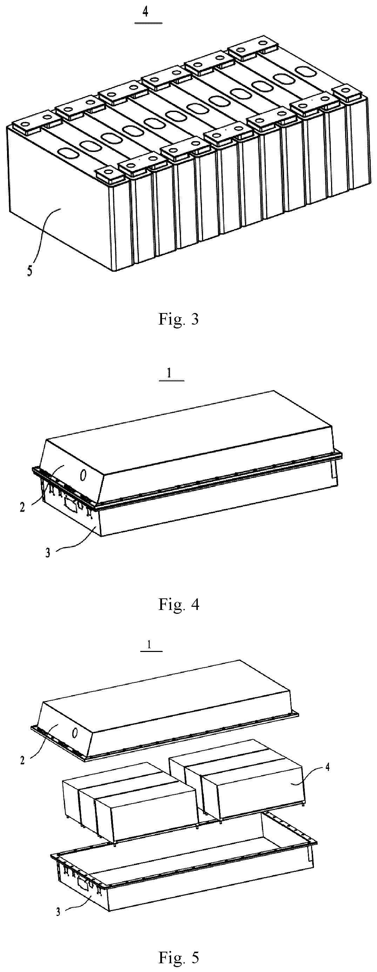

Fig. 3 is a schematic diagram of a battery module 4 as an example. As shown in Fig. 3, in the battery module 4, a plurality of secondary batteries 5 may be arranged in sequence along a length of the battery module 4. Of course, the secondary batteries may be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the foregoing battery module may alternatively be assembled into a battery pack, and the quantity of the battery module included in the battery pack may be adjusted according to the application and capacity of the battery pack.

Fig. 4 and Fig. 5 are schematic diagrams of a battery pack 1 as an example. As shown in Fig. 4 and Fig. 5, the battery pack 1 may include a battery box and a plurality of battery modules 4 disposed in the battery box. The battery box includes an upper box body 2 and a lower box body 3. The upper box body 2 is used to close the lower box body 3 to form a closed space for accommodating the battery modules 4. A plurality of battery modules 4 may be arranged in the battery box in any manner.

**Electrical device**

In a second aspect, the present application provides an electrical device, which includes at least one of the secondary battery, the battery module, and the battery pack of the present application. The secondary battery, the battery module, and the battery pack may be used as a power supply of the electrical device or as an energy storage unit of the electrical device. The electrical device may be, but is not limited to, a mobile device (such as a mobile phone or a notebook computer), an electric vehicle (such as a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may include the secondary battery, the battery module, or the battery pack according to its usage requirements.

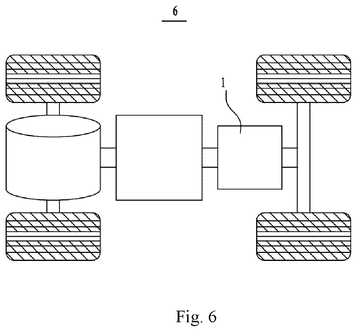

Fig. 6 is a schematic diagram of an electrical device as an example. The electrical device 6 is a pure electric vehicle, a hybrid electric vehicle, a plug-in hybrid electric vehicle, or the like. In order to meet requirements of the electrical device for high power and high energy density, the battery pack 1 or the battery module may be used.

As another example, the electrical device may be a mobile phone, a tablet computer, a notebook computer, or the like. The electrical device is generally required to be thin and light, so the secondary battery may be used as a power supply.

**Examples**

The following examples more specifically describe the content disclosed in the present application, and these examples are only used for explanatory description, because various modifications and changes made within the scope of the content disclosed in the present application are apparent to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

**Example 1**

1. Manufacturing of a positive electrode plate

An aluminum foil with a thickness of 12 $\mu$m was used as a positive electrode current collector.

A positive electrode active material $LiNi_{0.6}Co_{0.2}Mn_{0.2}O_2$, a conductive agent carbon black, and polyvinylidene fluoride (PVDF) as a binder were fully mixed at a weight ratio of 97.5:1.4:1.1 in an appropriate amount of solvent NMP to form a uniform positive electrode slurry; and the positive electrode slurry was uniformly applied to a surface of the positive electrode current collector aluminum foil followed by drying and cold pressing to obtain a positive electrode plate.

2. Manufacturing of a negative electrode plate

A copper foil with a thickness of 8 $\mu$m was used as a negative electrode current collector.

A negative electrode active material graphite, styrene butadiene rubber (SBR) as a binder, carboxymethyl cellulose sodium (CMC-Na) as a thickener, and a conductive agent carbon black (Super P) were fully mixed at a weight ratio of 96.2:1.8:1.2:0.8 in an appropriate amount of solvent deionized water to form a uniform negative electrode slurry; and the negative electrode slurry was uniformly applied to a surface of the negative electrode current collector copper foil followed by drying and cold pressing to obtain a negative electrode plate

3. Separator

A porous polyethylene (PE) film was used as the separator.

4. Preparation of an electrolytic solution

In an environment with a water content less than 10 ppm, non-aqueous organic solvents including ethylene carbonate EC, and diethyl carbonate DEC were mixed at a volume ratio of 1:1 to obtain an electrolyte solvent. Subsequently, a lithium salt was mixed with the mixed solvent to prepare the electrolytic solution with a lithium salt concentration of 1 mol/L.

5. Manufacturing of a secondary battery

The positive electrode plate, the separator, and the negative electrode plate were laminated in sequence to ensure that the separator was located between the positive electrode plate and the negative electrode plate for separation, and then wound to obtain an electrode assembly; and the electrode assembly was placed in an outer package housing and dried, then the electrolytic solution was injected, followed by vacuum packaging, standing, formation, shaping, and other processes, thereby obtaining a lithium-ion battery.

**Example 2**

**Examples 2-1 to 2-10**

The secondary batteries in Examples 2-1 to 2-10 were manufactured by a similar method to Example 1, with the difference from Example 1 that the mass percentages C% of the boron-containing lithium salt was adjusted in Examples 2-1 to 2-10.

**Examples 2-11 to 2-12**

The secondary batteries in Examples 2-11 to 2-12 were manufactured by a similar method to Example 1, with the difference from Example 1 that the type of the boron-containing lithium salt was adjusted in Examples 2-11 to 2-12.

**Comparative Example 1**

The secondary battery in Comparative Example 1 was manufactured by a similar method to Example 1, with the difference from Example 1 that no boron-containing lithium salt was added and only $LiPF_6$ was added.

**Comparative Examples 2 to 3**

The secondary batteries in Comparative Examples 2 to 3 were manufactured by a similar method to Example 1, with the difference from Example 1 that the mass percentage C% of the boron-containing lithium salt was adjusted in Comparative Examples 2 to 3.

**Example 3**

The secondary batteries in Examples 3-1 to 3-7 were manufactured by a similar method to Example 1, with the difference from Example 1 that the mass B in gram of the electrolytic solution and the discharge capacity A in Ah of the secondary battery were adjusted in Examples 3-1 to 3-7.

**Example 4**

The secondary batteries in Examples 4-1 to 4-9 were manufactured by a similar method to Example 1, with the difference from Example 1 that the type and content of the negative electrode film-forming additive were adjusted in Examples 4-1 to 4-9.

**Example 5**

The secondary batteries in Examples 5-1 to 5-4 were manufactured by a similar method to Example 1, with the difference from Example 1 that the coating weight F mg/1540.25mm$^2$ of the negative electrode film layer was adjusted in Examples 5-1 to 5-4.

Data of Examples 1-5 and the comparative examples were shown in Table 1 and Table 2.

Table 1

| No. | Electrolytic solution | | | | Negative electrode film layer F in mg/ 1540.25m m² | Secondary battery | | | |
|---|---|---|---|---|---|---|---|---|---|
| | Primary lithium salt | Type of boron-containing lithium salt | C% | Injection amount B in g | | Discharge capacity in Ah | B/A | B×C%/ A | B×(C+D) %/F |
| Example 1 | LiPF$_6$ | LiBF$_4$+LiDFOB+LiBOB | 0.40% | 4 | 185 | 3.678 | 1.09 | 0.00435 | $9.32 \times 10^{-5}$ |
| Example 2-1 | LiPF$_6$ | LiBF$_4$+LiDFOB+LiBOB | 0.10% | 4 | 185 | 3.242 | 1.23 | 0.00123 | $7.45 \times 10^{-5}$ |
| Example 2-2 | LiPF$_6$ | LiBF$_4$+LiDFOB+LiBOB | 0.40% | 4 | 185 | 3.425 | 1.17 | 0.00467 | $8.98 \times 10^{-5}$ |
| Example 2-3 | LiPF$_6$ | LiBF$_4$+LiDFOB+LiBOB | 0.20% | 4 | 185 | 3.251 | 1.23 | 0.00246 | $8.11 \times 10^{-5}$ |
| Example 2-4 | LiPF$_6$ | LiBF$_4$+LiDFOB+LiBOB | 0.20% | 4 | 185 | 3.605 | 1.11 | 0.00222 | $7.32 \times 10^{-5}$ |
| Example 2-5 | LiPF$_6$ | LiBF$_4$+LiDFOB+LiBOB | 0.80% | 4 | 185 | 3.612 | 1.11 | 0.00886 | $1.1 \times 10^{-4}$ |
| Example 2-6 | LiPF$_6$ | LiBF$_4$+LiDFOB+LiBOB | 1.20% | 4 | 185 | 3.611 | 1.11 | 0.01329 | $1.33 \times 10^{-4}$ |
| Example 2-7 | LiPF$_6$ | LiBF$_4$+LiDFOB+LiBOB | 1.50% | 4 | 185 | 3.605 | 1.11 | 0.01664 | $1.5 \times 10^{-4}$ |
| Example 2-8 | LiPF$_6$ | LiBF$_4$+LiDFOB+LiBOB | 2.00% | 4 | 185 | 3.603 | 1.11 | 0.02220 | $1.81 \times 10^{-4}$ |
| Example 2-9 | LiPF$_6$ | LiBF$_4$+LiDFOB+LiBOB | 5.00% | 4 | 185 | 3.555 | 1.13 | 0.05626 | $3.68 \times 10^{-4}$ |
| Example 2-10 | LiPF$_6$ | LiBF$_4$+LiDFOB+LiBOB | 8.00% | 9 | 185 | 3.101 | 2.90 | 0.23218 | $1.41 \times 10^{-3}$ |
| Example 2-11 | LiPF$_6$ | LiDFOB | 0.40% | 4 | 185 | 3.244 | 1.23 | 0.00001 | $9.44 \times 10^{-5}$ |
| Example 2-12 | LiPF$_6$ | LiBOB | 0.01% | 4 | 185 | 3.245 | 1.23 | 0.00012 | $6.85 \times 10^{-5}$ |
| Comparative Example 1 | LiPF$_6$ | / | / | 4 | 185 | 3.009 | 1.33 | 0.00000 | / |
| Comparative Example 2 | LiPF$_6$ | LiBF$_4$+LiDFOB+LiBOB | 5.00% | 4 | 185 | 0.780 | 5.13 | 0.25641 | $1.67 \times 10^{-3}$ |
| Comparative Example 3 | LiPF$_6$ | LiBF$_4$+LiDFOB+LiBOB | 10.00 % | 4 | 185 | 0.600 | 6.67 | 0.66667 | $3.97 \times 10^{-3}$ |
| Example 3-1 | LiPF$_6$ | LiBF$_4$+LiDFOB+LiBOB | 0.40% | 0.01 | 185 | 0.050 | 0.20 0 | 0.00080 | $1.54 \times 10^{-5}$ |
| Example 3-2 | LiPF$_6$ | LiBF$_4$+LiDFOB+LiBOB | 0.40% | 0.5 | 185 | 0.950 | 0.5 | 0.00211 | $3.84 \times 10^{-5}$ |
| Example 3-3 | LiPF$_6$ | LiBF$_4$+LiDFOB+LiBOB | 0.40% | 50 | 185 | 56.899 | 0.9 | 0.00352 | $6.91 \times 10^{-5}$ |
| Example 3-4 | LiPF$_6$ | LiBF$_4$+LiDFOB+LiBOB | 0.40% | 220 | 185 | 75.776 | 2.9 | 0.01161 | $2.23 \times 10^{-4}$ |
| Example 3-5 | LiPF$_6$ | LiBF$_4$+LiDFOB+LiBOB | 0.40% | 800 | 185 | 180.000 | 4.4 | 0.01778 | $8.14 \times 10^{-4}$ |
| Example 3-6 | LiPF$_6$ | LiBF$_4$+LiDFOB+LiBOB | 0.40% | 1500 | 185 | 550.000 | 0.37 | 0.00100 | $2.84 \times 10^{-5}$ |
| Example 3-7 | LiPF$_6$ | LiBF$_4$+LiDFOB+LiBOB | 0.40% | 3000 | 185 | 1000.00 | 0.33 | 0.00100 | $2.53 \times 10^{-5}$ |

| No. | Electrolytic solution | | | | Negative electrode film layer F in mg/1540.25mm² | Secondary battery | | | |
|---|---|---|---|---|---|---|---|---|---|
| | Primary lithium salt | Type of boron-containing lithium salt | C% | Injection amount B in g | | Discharge capacity in Ah | B/A | B×C%/A | B×(C+D)%/F |
| Example 4-1 | LiPF$_6$ | LiBF$_4$+LiDFOB+LiBOB | 0.40% | 4 | 185 | 3.678 | 1.09 | 0.00435 | 2.42×10$^{-5}$ |
| Example 4-2 | LiPF$_6$ | LiBF$_4$+LiDFOB+LiBOB | 0.40% | 4 | 185 | 3.678 | 1.09 | 0.00435 | 2.47×10$^{-5}$ |
| Example 4-3 | LiPF$_6$ | LiBF$_4$+LiDFOB+LiBOB | 0.40% | 4 | 185 | 3.678 | 1.09 | 0.00435 | 2.53×10$^{-5}$ |
| Example 4-4 | LiPF$_6$ | LiBF$_4$+LiDFOB+LiBOB | 0.40% | 4 | 185 | 3.678 | 1.09 | 0.00435 | 2.53×10$^{-5}$ |
| Example 4-5 | LiPF$_6$ | LiBF$_4$+LiDFOB+LiBOB | 0.40% | 4 | 185 | 3.678 | 1.09 | 0.00435 | 8.37×10$^{-5}$ |
| Example 4-6 | LiPF$_6$ | LiBF$_4$+LiDFOB+LiBOB | 0.40% | 4 | 185 | 3.678 | 1.09 | 0.00435 | 8.37×10$^{-5}$ |
| Example 4-7 | LiPF$_6$ | LiBF$_4$+LiDFOB+LiBOB | 0.40% | 4 | 185 | 3.678 | 1.09 | 0.00435 | 8.43×10$^{-5}$ |
| Example 4-8 | LiPF$_6$ | LiBF$_4$+LiDFOB+LiBOB | 0.40% | 4 | 185 | 3.678 | 1.09 | 0.00435 | 2.59×10$^{-4}$ |
| Example 4-9 | LiPF$_6$ | LiBF$_4$+LiDFOB+LiBOB | 0.40% | 4 | 185 | 3.678 | 1.09 | 0.00435 | 2.36×10$^{-5}$ |
| Example 5-1 | LiPF$_6$ | LiBF$_4$+LiDFOB+LiBOB | 0.40% | 4 | 50 | 3.758 | 1.06 | 0.00426 | 3.45×10$^{-4}$ |
| Example 5-2 | LiPF$_6$ | LiBF$_4$+LiDFOB+LiBOB | 0.40% | 4 | 5 | 3.895 | 1.03 | 0.00411 | 3.45×10$^{-3}$ |
| Example 5-3 | LiPF$_6$ | LiBF$_4$+LiDFOB+LiBOB | 0.40% | 4 | 250 | 3.088 | 1.30 | 0.00518 | 6.90×10$^{-5}$ |
| Example 5-4 | LiPF$_6$ | LiBF$_4$+LiDFOB+LiBOB | 0.40% | 4 | 500 | 2.587 | 1.55 | 0.01546 | 1.20×10$^{-4}$ |

Table 2

| No. | Type of negative electrode film-forming additives | | | | | | | | | |
| | Carbonates | D1% | Sulfates | D2% | Lithium salts with fluorooxalate or phosphate skeleton | D3% | Lithium salts with sulphonylimide skeleton | D4% | D% | (C+D)% |
|---|---|---|---|---|---|---|---|---|---|---|
| Example 1 | VA | 0.01% | DES | 0.01% | LiTFOP | 1.00% | LiN(SO$_2$F)$_2$ | 0.001% | 1.02% | 1.42% |
| Example 2-1 | VA | 0.01% | DES | 0.01% | LiTFOP | 1.00% | LiN(SO$_2$F)$_2$ | 0.001% | 1.02% | 1.42% |
| Example 2-2 | VA | 0.01% | DES | 0.01% | LiTFOP | 1.00% | LiN(SO$_2$F)$_2$ | 0.001% | 1.02% | 1.42% |
| Example 2-3 | VA | 0.01% | DES | 0.01% | LiTFOP | 1.00% | LiN(SO$_2$F)$_2$ | 0.001% | 1.02% | 1.42% |
| Example 2-4 | VA | 0.01% | DES | 0.01% | LiTFOP | 1.00% | LiN(SO$_2$F)$_2$ | 0.001% | 1.02% | 1.42% |
| Example 2-5 | VA | 0.01% | DES | 0.01% | LiTFOP | 1.00% | LiN(SO$_2$F)$_2$ | 0.001% | 1.02% | 1.42% |
| Example 2-6 | VA | 0.01% | DES | 0.01% | LiTFOP | 1.00% | LiN(SO$_2$F)$_2$ | 0.001% | 1.02% | 1.42% |
| Example 2-7 | VA | 0.01% | DES | 0.01% | LiTFOP | 1.00% | LiN(SO$_2$F)$_2$ | 0.001% | 1.02% | 1.42% |
| Example 2-8 | VA | 0.01% | DES | 0.01% | LiTFOP | 1.00% | LiN(SO$_2$F)$_2$ | 0.001% | 1.02% | 1.42% |
| Example 2-9 | VA | 0.01% | DES | 0.01% | LiTFOP | 1.00% | LiN(SO$_2$F)$_2$ | 0.001% | 1.02% | 1.42% |
| Example 2-10 | VA | 0.01% | DES | 0.01% | LiTFOP | 1.00% | LiN(SO$_2$F)$_2$ | 0.001% | 1.02% | 1.42% |
| Example 2-11 | VA | 0.01% | DES | 0.01% | LiTFOP | 1.00% | LiN(SO$_2$F)$_2$ | 0.001% | 1.02% | 1.42% |
| Example 2-12 | VA | 0.01% | DES | 0.01% | LiTFOP | 1.00% | LiN(SO$_2$F)$_2$ | 0.001% | 1.02% | 1.42% |
| Comparative Example 1 | VA | 0.01% | DES | 0.01% | LiTFOP | 1.00% | LiN(SO$_2$F)$_2$ | 0.001% | 1.02% | 1.42% |
| Comparative Example 2 | VA | 0.01% | DES | 0.01% | LiTFOP | 1.00% | LiN(SO$_2$F)$_2$ | 0.001% | 1.02% | 1.42% |
| Comparative Example 3 | VA | 0.01% | DES | 0.01% | LiTFOP | 1.00% | LiN(SO$_2$F)$_2$ | 0.001% | 1.02% | 1.42% |
| Example 3-1 | VA | 0.01% | DES | 0.01% | LiTFOP | 1.00% | LiN(SO$_2$F)$_2$ | 0.001% | 1.02% | 1.42% |
| Example 3-2 | VA | 0.01% | DES | 0.01% | LiTFOP | 1.00% | LiN(SO$_2$F)$_2$ | 0.001% | 1.02% | 1.42% |
| Example 3-3 | VA | 0.01% | DES | 0.01% | LiTFOP | 1.00% | LiN(SO$_2$F)$_2$ | 0.001% | 1.02% | 1.42% |
| Example 3-4 | VA | 0.01% | DES | 0.01% | LiTFOP | 1.00% | LiN(SO$_2$F)$_2$ | 0.001% | 1.02% | 1.42% |
| Example 3-5 | VA | 0.01% | DES | 0.01% | LiTFOP | 1.00% | LiN(SO$_2$F)$_2$ | 0.001% | 1.02% | 1.42% |
| Example 3-6 | VA | 0.01% | DES | 0.01% | LiTFOP | 1.00% | LiN(SO$_2$F)$_2$ | 0.001% | 1.02% | 1.42% |
| Example 3-7 | VA | 0.01% | DES | 0.01% | LiTFOP | 1.00% | LiN(SO$_2$F)$_2$ | 0.001% | 1.02% | 1.42% |
| Example 4-1 | VA | 0.01% | / | / | / | / | / | / | 0.01% | 0.41% |

(continued)

| No. | Type of negative electrode film-forming additives | | | | | | | | | | |
|---|---|---|---|---|---|---|---|---|---|---|---|
| | Carbonates | D1% | Sulfates | D2% | Lithium salts with fluorooxalate or phosphate skeleton | D3% | Lithium salts with sulphonylimide skeleton | D4% | D% | (C+D)% |
| Example 4-2 | VA | 0.01% | DES | 0.01% | / | / | / | / | 0.02% | 0.42% |
| Example 4-3 | VA | 0.01% | DES | 0.01% | LiTFOP | 0.01% | / | / | 0.03% | 0.43% |
| Example 4-4 | VA | 0.01% | DES | 0.01% | LiTFOP | 0.01% | $LiN(SO_2F)_2$ | 0.001% | 0.03% | 0.43% |
| Example 4-5 | VA | 1.00% | DES | 0.01% | LiTFOP | 0.01% | $LiN(SO_2F)_2$ | 0.001% | 1.02% | 1.42% |
| Example 4-6 | VA | 0.01% | DES | 1.00% | LiTFOP | 0.01% | $LiN(SO_2F)_2$ | 0.001% | 1.02% | 1.42% |
| Example 4-7 | VA | 0.01% | DES | 0.01% | LiTFOP | 0.01% | $LiN(SO_2F)_2$ | 1.000% | 1.03% | 1.43% |
| Example 4-8 | VA | 1.00% | DES | 1.00% | LiTFOP | 1.00% | $LiN(SO_2F)_2$ | 1.000% | 4.00% | 4.40% |
| Example 4-9 | / | / | / | / | / | / | / | / | 0.00% | 0.40% |
| Example 5-1 | VA | 0.01% | DES | 0.01% | LiTFOP | 1.00% | $LiN(SO_2F)_2$ | 0.001% | 1.02% | 1.42% |
| Example 5-2 | VA | 0.01% | DES | 0.01% | LiTFOP | 1.00% | $LiN(SO_2F)_2$ | 0.001% | 1.02% | 1.42% |
| Example 5-3 | VA | 0.01% | DES | 0.01% | LiTFOP | 1.00% | $LiN(SO_2F)_2$ | 0.001% | 1.02% | 1.42% |
| Example 5-4 | VA | 0.01% | DES | 0.01% | LiTFOP | 1.00% | $LiN(SO_2F)_2$ | 0.001% | 1.02% | 1.42% |

**Test section**

(1) Normal-temperature cycle performance test of the secondary battery

At 25°C, the secondary battery was charged with a constant current of 0.5 C to 4.4 V and continuously charged by the constant voltage until the current was 0.05 C, then the secondary battery was in a fully charged state, at which the charge capacity was recorded as a 1st cycle charge capacity. The secondary battery was allowed to stand for 5 min and then discharged by a constant current of 1 C to 2.8V, and the resulting discharge capacity was recorded as the 1st cycle discharge capacity. This was a charging and discharging cycle. The secondary battery was subjected to the above charging and discharging cycle according to the above method, and the discharge capacity for each cycle was recorded. Capacity retention rate (%) of the secondary battery at 25°C for 600 cycles = discharge capacity at the 600th cycle / discharge capacity at the 1st cycle $\times$ 100%.

(2) High-temperature cycle performance test of the secondary battery

At 45°C, the secondary battery was charged with a constant current of 0.5 C to 4.4 V and continuously charged by the constant voltage until the current was 0.05 C, then the secondary battery was in a fully charged state, at which the charge capacity was recorded as a 1st cycle charge capacity. The secondary battery was allowed to stand for 5 min and then discharged by a constant current of 1 C to 2.8V, at which the discharge capacity was recorded as a 1st cycle discharge capacity. This was a charging and discharging cycle. The secondary battery was subjected to the above charging and discharging cycle according to the above method, and the discharge capacity after each cycle was recorded. Capacity retention rate (%) of the secondary battery at 45°C for 600 cycles = discharge capacity at the 600th cycle / discharge capacity at the 1st cycle $\times$ 100%.

(3) High-temperature storage performance test of the secondary battery

After standing at 60°C for 6h, the secondary battery was first charged to 4.4V at 0.33C and continuously charged by the constant voltage until the current was 0.05 C, then the secondary battery was allowed to stand for 5 min and then discharged by a constant current of 0.33 C to 2.8V, with the initial discharge capacity denoted as A0 in Ah. Then the secondary battery was charged to 4.4V at 0.5C and continuously charged by the constant voltage until the current was 0.05 C, then the fully charged battery was allowed to stand in a 60°C high temperature oven for 100 days. The secondary battery was removed and discharged to 2.8V at a current of 1C, with the final discharge capacity denoted as A1 in Ah.

Capacity retention of the secondary battery after 100 days of storage at 60°C (%) = [(A1- A0)/A0] $\times$ 100%.

Storage volume test method: After standing at 60°C for 6h, the secondary battery was charged to 4.3V at a constant current of 1C and continuously charged by the constant voltage until the current was 0.05 C. At the moment, the secondary battery was tested by a drainage method for its volume, which was recorded as V0. The secondary battery was placed in a thermostat at 60° C, and was taken out immediately after being stored for 30 days. At the moment, the secondary battery was tested by a drainage method for its volume, which was recorded as V1. The volume expansion rate (%) of the secondary battery after 30 days of storage at 60°C = [(V1-V0)/V0] $\times$ 100%.

**Test results**

The cycle performance and storage performance of the secondary battery were improved as shown in Table 3.

Table 3

| No. | Capacity retention rate (%) at 25°C for 500 cycles | Capacity retention rate (%) at 45°C for 300 cycles | Capacity retention rate (%) at 60°C for 100 cycles | Volume expansion rate after 30 days of storage at 60°C |
|---|---|---|---|---|
| Example 1 | 82.05% | 80.25% | 74.50% | 44.59% |
| Example 2-1 | 78.14% | 80.66% | 81.23% | 40.84% |
| Example 2-2 | 80.12% | 80.74% | 82.49% | 41.65% |
| Example 2-3 | 83.85% | 81.98% | 82.52% | 41.98% |
| Example 2-4 | 85.32% | 81.94% | 82.65% | 42.58% |

(continued)

| No. | Capacity retention rate (%) at 25°C for 500 cycles | Capacity retention rate (%) at 45°C for 300 cycles | Capacity retention rate (%) at 60°C for 100 cycles | Volume expansion rate after 30 days of storage at 60°C |
|---|---|---|---|---|
| Example 2-5 | 83.57% | 81.88% | 82.71% | 42.86% |
| Example 2-6 | 82.82% | 81.97% | 82.45% | 43.23% |
| Example 2-7 | 83.57% | 80.58% | 82.44% | 42.56% |
| Example 2-8 | 82.58% | 82.54% | 83.05% | 40.52% |
| Example 2-9 | 83.80% | 81.58% | 82.43% | 42.86% |
| Example 2-10 | 76.21% | 72.41% | 73.90% | 39.58% |
| Example 2-11 | 75.98% | 78.90% | 67.81% | 46.78% |
| Example 2-12 | 75.53% | 80.58% | 80.71% | 39.50% |
| Comparative Example 1 | 65.85% | 68.98% | 60.44% | 32.52% |
| Comparative Example 2 | 72.33% | 78.96% | 79.85% | 38.75% |
| Comparative Example 3 | 72.54% | 79.27% | 80.03% | 39.08% |
| Example 3-1 | 79.88% | 78.23% | 79.90% | 41.39% |
| Example 3-2 | 81.02% | 78.67% | 80.30% | 42.55% |
| Example 3-3 | 82.62% | 80.38% | 81.23% | 41.27% |
| Example 3-4 | 81.97% | 79.77% | 80.62% | 41.44% |
| Example 3-5 | 83.83% | 81.33% | 83.07% | 43.03% |
| Example 3-6 | 81.74% | 80.07% | 80.89% | 41.44% |
| Example 3-7 | 79.74% | 82.25% | 82.81% | 42.63% |
| Example 4-1 | 80.48% | 81.09% | 82.80% | 42.78% |
| Example 4-2 | 82.51% | 80.73% | 81.24% | 42.73% |
| Example 4-3 | 83.90% | 80.69% | 81.37% | 43.30% |
| Example 4-4 | 82.24% | 80.64% | 81.42% | 43.57% |
| Example 4-5 | 81.53% | 80.72% | 81.18% | 43.92% |
| Example 4-6 | 82.24% | 79.40% | 81.17% | 43.28% |
| Example 4-7 | 81.30% | 81.26% | 81.75% | 41.34% |
| Example 4-8 | 82.46% | 80.35% | 81.16% | 43.57% |
| Example 4-9 | 84.08% | 81.91% | 82.74% | 43.96% |
| Example 5-1 | 80.83% | 81.42% | 83.10% | 43.88% |
| Example 5-2 | 82.94% | 81.14% | 81.66% | 42.73% |
| Example 5-3 | 81.77% | 78.62% | 79.28% | 41.98% |
| Example 5-4 | 82.67% | 81.05% | 81.85% | 43.57% |

As can be seen from the table, in the Comparative Example 1 where no boron-containing lithium salt is added, the negative electrode active material fails to be protected, thereby enabling the structure of the negative electrode active material easy to be damaged during cycling process of the secondary battery, and the cycle performance and storage performance of the secondary battery are poor.

As shown by Examples of the present application and Comparative Examples 2-3, a boron-containing lithium salt is added to an electrolytic solution, which is capable of providing good protection for the negative electrode active material, thereby improving the cycle performance and storage performance of the secondary battery. However, the secondary batteries of Comparative Examples 2-3 do not have significantly improved performance for the reasons that an excessive amount of lithium boron-containing salts is added, and the SEI film formed from the lithium boron-containing salts alone in the negative electrode active material has a stability that is insufficient to form a long-term and effective protection for the negative electrode active material. While in Example 1 to Examples 2-12, by adjusting the addition amount of the boron-containing lithium salt to satisfy the following relationship: $1 \leq B/A \leq 5$, $5 \times 10^{-6} \leq B \times C\%/A \leq 0.25$; especially satisfying $1 \times 10^{-3} \leq B \times C\%/A \leq 0.23$, it is possible to make the boron-containing lithium salt and the other parameters compatible, so that the boron-containing lithium salt not only is able to form a stable and dense SEI film on the surface of the negative electrode active material, but also is able to protect the negative electrode active material for a long period of time.

As shown by Examples 3-1 to 3-7, by regulating the injection amount of electrolytic solution and the discharge capacity A in Ah of the secondary battery, in particular, the mass B of the electrolytic solution satisfying: $0.01 \leq B \leq 3000$; optionally, $0.5 \leq B \leq 1500$, it is possible to regulate thickness of the SEI film formed on the surface of the negative electrode active material from the boron-containing lithium salt, which can improve the cycle performance and storage performance of the secondary battery.

As shown by Examples 4-1 to 4-7, by regulating the type and content of the negative electrode film-forming additive, the active ingredient in the electrolytic solution is able to form a stable SEI film with a complicated composition on the surface of the negative electrode active material, which can further improve the protective effect on the negative electrode active material, and thus can further improve the cycle performance and storage performance of the secondary battery.

As shown by Examples 5-1 to 5-4, by regulating the coating weight of the negative electrode film layer, it is possible to enable the electrolytic solution to sufficiently protect the surface of the negative electrode active material, and uniformly form the SEI film on the surface of the negative electrode active material, thereby improving the cycle performance and storage performance of the secondary battery.

Although the present application is described with reference to the preferred embodiments, various improvements can be made and equivalents can be substituted for components therein without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. A secondary battery, comprising

   a positive electrode plate,
   a negative electrode plate comprising a negative electrode film layer containing a negative electrode active material; and
   an electrolytic solution comprising a boron-containing lithium salt, the boron-containing lithium salt being configured to form a solid electrolyte interface film on the surface of the negative electrode active material, wherein
   a discharge capacity of the secondary battery is denoted as A in Ah,
   a mass of the electrolytic solution is denoted as B in g,
   a mass percentage of the boron-containing lithium salt relative to a total mass of the electrolytic solution is denoted as C%; and
   the secondary battery satisfies: $1 \leq B/A \leq 5$, $5 \times 10^{-6} \leq B \times C\%/A \leq 0.25$; optionally, $1 \times 10^{-3} \leq B \times C\%/A \leq 0.23$.

2. The secondary battery as claimed in claim 1, wherein the secondary battery satisfies at least one of conditions (1) to (3):

$$(1)\ 0.01 \leq A \leq 1000;$$

optionally, $50 \leq A \leq 550$;

$$(2)\ 0.01 \leq B \leq 3000;$$

optionally, $0.5 \leq B \leq 1500$;

$$(3)\ 1 \times 10^{-4}\% \leq C\% \leq 5\%;$$

optionally, $0.01\% \leq C\% \leq 3\%$.

3. The secondary battery as claimed in claim 1 or 2, wherein

the electrolytic solution further comprises a negative electrode film-forming additive, the negative electrode film-forming additive comprising a first additive and/or a second additive, the first additive comprises at least two of a carbonate additive, a sulphate additive, and a sulfite additive; and the second additive comprises a lithium salt with a fluoro-oxalate or phosphate skeleton and a lithium salt with a sulfonylimide skeleton, wherein a mass percentage of the negative electrode film-forming additive relative to the total mass of the electrolytic solution is denoted as D%, and the secondary battery further satisfies: $0.1\% \leq (C+D)\% \leq 20\%$.

4. The secondary battery as claimed in claim 3, wherein the secondary battery further satisfies at least one of conditions (4) to (7):

(4) a mass percentage of the carbonate additive relative to the total mass of the electrolytic solution is denoted as D1%, where $10^{-4}\% \leq D1\% \leq 5\%$;
(5) a mass percentage of the sulfate additive and sulfite additives relative to the total mass of the electrolytic solution is denoted as D2%, where $10^{-4}\% \leq D2\% \leq 5\%$;
(6) a mass percentage of the lithium salt with a fluoro-oxalate or phosphate skeleton relative to the total mass of the electrolytic solution is denoted as D3%, where $10^{-4}\% \leq D3\% < 5\%$; and
(7) a mass percentage of the lithium slat with a sulfonylimide skeleton relative to the total mass of the electrolytic solution is denoted as D4%, where $10^{-4}\% \leq D4\% \leq 5\%$.

5. The secondary battery as claimed in claim 3 or 4, wherein

the carbonate additive includes a cyclic carbonate additive and/or a linear carbonate additive; optionally, the cyclic carbonate additive includes one or more of vinylidene carbonate VC, fluoroethylene carbonate FEC, difluoroethylene carbonate DFEC, vinyl ethylene carbonate VEC, and dicaprylyl carbonate CC; the linear carbonate additive includes one or more of allyl ethyl carbonate AEC, diphenyl carbonate DPC, methyl allyl carbonate MAC, and polycarbonate VA; and/or
the sulfate additive includes a cyclic sulfonate additive and/or a hydrocarbyl sulfate additive; optionally, the cyclic sulfonate additive includes one or more of 1,3-propane sultone PS, propene sultone PES, and 3-fluoro-1,3-propane sultone FPS; and/or the hydrocarbyl sulfate additive includes one or more of ethylene sulfate DTD, diethyl sulfate DES, and dimethyl sulfate DMS; and/or
the sulfite additive includes ethylene sulfite ES and/or vinyl ethylene sulfite VES; and/or
the lithium salt with a fluoro-oxalate or phosphate skeleton includes one or more of lithium tetrafluoro(oxalate) phosphate LiTFOP, lithium difluorophosphate $LiPO_2F_2$, and lithium bisfluorodioxalate phosphate LiBODFP; and/or
the lithium slat with a sulfonylimide skeleton includes one or more of lithium bifluorosulfonimide $[LiN(SO_2F)_2]$, lithium bis(trifluoromethylsulfonyl)imide $LiN(CF_3SO_2)_2$, and lithium bistrifluoromethylsulfonimide LiTFSI.

6. The secondary battery as claimed in any one of claims 3 to 5, wherein a coating weight of the negative electrode film layer is denoted as F in $mg/1540.25\ mm^2$, and the secondary battery further satisfies: $2\times10^{-5} \leq B\times(C+D)\%/F \leq 1$.

7. The secondary battery as claimed in any one of claims 1 to 6, wherein $50 \leq F \leq 500$.

8. The secondary battery as claimed in any one of claims 1 to 7, wherein the boron-containing lithium salt has a molecular formula of $LiBF_aO_bC_cP_d$, in which $0 \leq a \leq 4$, $0 \leq b \leq 8$, $0 \leq c \leq 4$, $0 \leq d \leq 4$.

9. The secondary battery as claimed in claim 8, wherein the boron-containing lithium salt includes one or more of lithium tetrafluoroborate $LiBF_4$, lithium bisoxalate borate LiBOB, and lithium bifluorooxalate borate LiDFOB.

10. A battery module, comprising the secondary battery according to any one of claims 1 to 9.

11. A battery pack, comprising the battery module according to claim 10.

12. An electrical device, comprising the secondary battery according to any one of claims 1 to 9, the battery module according to claim 10, or the battery pack according to claim 11.

5

Fig. 1

5

53

52

51

Fig. 2

4

Fig. 3

1

Fig. 4

1

Fig. 5

6

Fig. 6

## INTERNATIONAL SEARCH REPORT

| | International application No. |
|---|---|
| | **PCT/CN2022/105828** |

### A. CLASSIFICATION OF SUBJECT MATTER

H01M 10/0525(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 电池, 负极, 阳极, 成膜, 添加剂, 硼酸锂, 硼酸盐, 锂硼, 硼锂, 容量, 克, SEI, Ah, g, battery, anode, negative, additive, film, form, borate, lithium, boron, capacity

### C. DOCUMENTS CONSIDERED TO BE RELEVANT

| Category* | Citation of document, with indication, where appropriate, of the relevant passages | Relevant to claim No. |
|---|---|---|
| X | CN 110571476 A (HENAN LITHIUM POWER SOURCE CO., LTD.) 13 December 2019 (2019-12-13)<br>    description, paragraphs 96-110, 150, and 225-231 | 1-12 |
| X | CN 111628218 A (ZHUHAI COSMX BATTERY CO., LTD.) 04 September 2020 (2020-09-04)<br>    description, paragraphs 6-97 | 1-5, 8-12 |
| X | CN 113991181 A (ZHENGZHOU INSTITUTE OF EMERGING INDUSTRIAL TECHNOLOGY) 28 January 2022 (2022-01-28)<br>    description, paragraphs [0008]-[0035] | 1-5, 8-12 |
| X | CN 103545552 A (HEFEI GUOXUAN HIGH-TECH POWER ENERGY CO., LTD.) 29 January 2014 (2014-01-29)<br>    description, paragraphs [0008]-[0035] | 1-5, 8-12 |
| A | CN 113745639 A (TIANJIN LISHEN BATTERY JOINT-STOCK CO., LTD.) 03 December 2021 (2021-12-03)<br>    entire document | 1-12 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 December 2022** | **16 December 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/105828**

| Patent document cited in search report | | | Publication date (day/month/year) | Patent family member(s) | Publication date (day/month/year) |
|---|---|---|---|---|---|
| CN | 110571476 | A | 13 December 2019 | None | |
| CN | 111628218 | A | 04 September 2020 | None | |
| CN | 113991181 | A | 28 January 2022 | None | |
| CN | 103545552 | A | 29 January 2014 | None | |
| CN | 113745639 | A | 03 December 2021 | None | |

Form PCT/ISA/210 (patent family annex) (January 2015)